# EUROPÄISCHE PATENTSCHRIFT

(11) **EP 3 528 994 B1**
(45) Veröffentlichungstag und Bekanntmachung des Hinweises auf die Patenterteilung: **10.08.2022**
(21) Anmeldenummer: 17797530.7
(22) Anmeldetag: 18.10.2017
(51) Int. Cl.: B23K 26/14, B23K 9/10, B23K 9/32

(54) **SCHLEPPGASDÜSE UND IHR HERSTELLVERFAHREN**
STRIP GAS NOZZLE AND ITS MANUFACTURING PROCESS
BUSE POUR GAZ D'ENTRAÎNEMENT ET SA MÉTHODE DE FABRICATION

(30) Priorität: 19.10.2016 DE 102016220509
(43) Veröffentlichungstag der Anmeldung: 28.08.2019
(73) Patentinhaber: Kjellberg-Stiftung, 03238 Finsterwalde (DE)
(72) Erfinder: SCHNICK, Michael, 09353 Oberlungwitz (DE); DREHER, Michael, 01665 Klipphausen (DE); PÄTZ, Felix, 03103 Neupetershain (DE); SCHUSTER, Henning, 01279 Dresden (DE)
(74) Vertreter: Pfenning, Meinig & Partner mbB
(86) Internationale Anmeldenummer: PCT/EP2017/076587
(87) Internationale Veröffentlichungsnummer: WO 2018/073293

(56) Entgegenhaltungen:
- EP-A2- 1 825 948
- DE-A1-102011 116 495
- DE-A1-102014 205 875
- US-A- 5 393 949
- US-A1- 2012 199 636
- US-A1- 2013 068 745

## Beschreibung

Die vorliegende Erfindung betrifft eine Schleppgasdüse zum Beaufschlagen eines Schweißbereichs mit einem Gas gemäß dem Oberbegriff des Anspruchs 1 (siehe z.B. US 5 393 949 A), und auch ihr Herstellverfahren (siehe Anspruch 8)

Bei verschiedenen Schweißverfahren wird ein Gas, insbesondere ein Schutzgas verwendet, um eine Stabilität eines Schweißprozesses zu erhöhen. Schleppgasdüsen sind hierbei an einem Brenner oder einer Brenneraufnahme befestigte Düsensysteme. Diese sollen eine nachlaufende Schmelze vor Luftzutritt schützen, wozu oftmals ein zusätzliches Schutzgas verwendet wird. Eine derartige Schleppgasdüse wird beispielsweise in der Druckschrift DE 10 2011116 495 A1 offenbart. Nachteilig an diesen Systemen ist jedoch, dass sie nur umständlich an verschiedene Einsatzgebiete anzupassen sind und dabei kompliziert aufgebaut sind. Aus der Druckschrift DE 10 2014 205 875 A1 ist eine Vorrichtung zum schichtweisen Herstellen eines dreidimensionalen Objekts bekannt, bei der eine Beströmungsvorrichtung zum Einsatz kommt. Die Druckschrift EP 1 825 948 A2 offenbart ein System zum Aufbringen mehrerer Werkstoffschichten mittels Laserunterstützung. Aus DE 10 2011116 495 A1 ist eine Prozessgashaube zur Beaufschlagung eines Schweißbereichs bekannt.

US 2012/0199636 A1 offenbart eine fluiddicht abgeschlossene Kammer mit Diffusoren als Gasverteiler.

Der vorliegenden Erfindung liegt daher die Aufgabe zugrunde, eine Schleppgasdüse und ihr Herstellverfahren vorzuschlagen, die flexibel und kostengünstig an verschiedene Schweißverfahren anpassbar ist sowie einen einfachen Aufbau aufweist.

Diese Aufgabe wird erfindungsgemäß gelöst durch eine Schleppgasdüse nach Anspruch 1. Ihr Herstellverfahren ist im Anspruch 8 definiert. Vorteilhafte Ausgestaltungen und Weiterentwicklungen sind in den abhängigen Ansprüchen beschrieben.

Eine Schleppgasdüse zum Beaufschlagen eines Schweißbereichs mit einem Gas weist eine Befestigungsvorrichtung für ein weiteres Bauteil, eine Schleppkammer und eine Gaseintrittsöffnung auf. Die Schleppkammer weist mindestens einen Gasverteiler auf, der zum Verteilen des durch die Gaseintrittsöffnung einströmenden Gases auf den Schweißbereich ausgebildet ist, was über eine länglichen Öffnung erfolgt, die an einer Unterseite der Schleppgasdüse angeordnet ist. Die Befestigungsvorrichtung und die Schleppkammer sind frei von einer Fügeverbindung ausgeführt und die längliche Öffnung ist durch ein abnehmbares Abdeckelement mit Öffnungen zumindest teilweise abgedeckt.

Das weitere Bauteil kann hierbei ein Brenner, eine Prozessdüse oder eine Laserstrahlungsquelle, aber auch eine weitere Schleppgasdüse sein. Dementsprechend kann die Befestigungsvorrichtung einen Ring zum Aufnehmen des Bauteils oder ein Element zum Herstellen einer kraftschlüssigen oder formschlüssigen Verbindung zwischen der Schleppgasdüse und dem weiteren Bauteil, insbesondere mindestens ein Gewinde für eine beide Bauteile verbindende Schraube aufweisen. Durch ein abnehmbares und anbringbares, also insbesondere wechselbares Abdeckelement, das typischerweise als Abdeckblech, insbesondere Lochblech, bzw. Strömungsgitter vorliegt, wird ein Verschleißteil bereitgestellt, durch das eine Gasströmung wie gewünscht eingestellt werden kann. Hierzu ist die längliche Öffnung zumindest teilweise, vorzugsweise aber komplett von dem Abdeckelement abgedeckt. Außerdem kann das Abdeckelement schnell gewechselt werden, falls Spritzer die Öffnungen verstopfen und somit keine gewünschte Anströmung des Gases erreicht werden kann bzw. andere Verschmutzungen oder Verschleiß eine ordnungsgemäße Verwendung nicht mehr erlauben. Das Abdeckelement kann als ein einziges Bauteil vorliegen, es können aber auch mehrere, typischerweise miteinander verbindbare bzw. miteinander verbundene Bauteile das Abdeckelement bilden. Als Gas soll im Rahmen dieser Schrift jedes Gas angesehen werden, das einer Schweißdüse oder dem Schweißbereich, der durch diese Schweißdüse bearbeitet wird, zugeführt wird. Dadurch, dass die Befestigungsvorrichtung und die Schleppkammer frei von einer Fügeverbindung ausgeführt sind, ergibt sich ein kompaktes und stabiles Bauteil, das einfach und effizient sowie mit sehr großer (spezifischer) geometrischer Anpassung an ein zu bearbeitendes Bauteil und an einen durchzuführenden Schweißprozess (z. B. durch eine Brennerposition und Brenneranstellwinkel) herzustellen ist. Da Verschleißteile wie das Abdeckelement typischerweise wechselbar, also abnehmbar und anbringbar, ausgestaltet sind und ein Grundkörper mit der Befestigungsvorrichtung und der Schleppkammer (sowie vorzugsweise der Gaseintrittsöffnung) kostengünstig, multifunktional und mit maximaler Variabilität herstellbar ist, wird eine gegenüber bisherigen Düsen in der Herstellung deutlich kostengünstigere und mit zusätzlichen Funktionen ausstattbare Schleppgasdüse bereitgestellt.

Gemäß der Erfindung sind die Befestigungsvorrichtung und die Schleppkammer einteilig ausgestaltet. Durch die einteilige Ausführung, die gemäß der Erfindung auch als monolithische Ausführung bezeichnet wird also insbesondere eine stoffschlüssige Ausführung der Befestigungsvorrichtung und der Schleppkammer in einem einzigen Bauteil, wird eine besonders einfach zu fertigende und stabile Schleppgasdüse bereitgestellt. Ebenso ist der Gasverteiler typischerweise einteilig mit dem Grundkörper, also der Schleppkammer und der Befestigungsvorrichtung ausgebildet.

Dadurch, dass die Befestigungsvorrichtung und die Schleppkammer durch ein schichtweise sehr feines Gefüge, insbesondere ein Nichtgleichgewichtsgefüge ausgebildet sein können, kann eine einfache Fertigung stabiler Bauteile erreicht werden. Typischerweise ist auch die Gaseintrittsöffnung mit diesem Gefüge ausgebildet. Eine vorzugsweise durchgeführte Herstellung mittels Strahlschmelzen, vorzugsweise mittels selektivem Laserschmelzen, Laserstrahlschmelzen und bzw. oder Elektronenstrahlschmelzen, die zu dem charakteristischen sehr feinkörnigen Gefüge führt, erlaubt es darüber hinaus, die Schleppgasdüse variabel zu gestalten und beispielsweise Biegungen oder poröse Strukturen an Positionen einzubringen, die mit bisherigen Herstellungsverfahren nicht herstellbar sind.

Gemäß der Erfindung ist in der Schleppkammer mindestens ein, typischerweise abnehmbarer, Gasverteilkörper angeordnet, der das Gas durch seine Form und Ausgestaltung in einer gewünschten Weise verteilt bzw. in Richtung der länglichen Öffnung leitet. Indem dieser Gasverteilkörper abnehmbar und anbringbar ist, kann er schnell gewechselt werden und die gesamte Schleppgasdüse an verschiedene gewünschte interne Gasverteilungen angepasst werden. Typischerweise wird der Gasverteilkörper in die Schleppkammer eingeschraubt, an die Schleppkammer angeschraubt und bzw. oder in die Schleppkammer eingeklemmt. Der Gasverteilkörper kann alternativ auch einteilig mit der Schleppkammer ausgestaltet sein, also nicht abnehmbar sein.

Gemäß der Erfindung ist der Gasverteilkörper als ein offenporiger Metallschaum oder ein aus Pulver gepresster Sinterkörper ausgebildet, da diese in einer gewünschten Weise hergestellt und vorgefertigt werden kann sowie mechanisch und thermisch stabil ist. Vorzugsweise ist der Gasverteilkörper derart ausgestaltet, dass ein Druckabfall in dem Schaum oder in dem Sinterkörper höher ist als ein Gesamtdruckabfall über dem strömungstechnisch vorgelagerten Gasverteiler.

Weiter gemäß der Erfindung ist in der Schleppkammer, mindestens ein einteilig mit der Schleppkammer ausgebildeter Kühlkanal für ein Kühlfluid angeordnet.

Durch eine interne Integration des Kühlkanals in die Schleppgasdüse bzw. die Schleppkammer, vorzugsweise bereits während der Herstellung der Schleppgasdüse, kann diese kompakt und dennoch funktionell gebaut werden, wobei ein einteiliger Aufbau auch die mechanische Stabilität erhöht.

Es kann vorgesehen sein, dass die Befestigungsvorrichtung für die Prozessdüse derart ausgestaltet ist, dass ein Brenner oder ein Brennerhalter an der Schleppgasdüse befestigbar ist und bzw. oder die Befestigungsvorrichtung selbst als Düse ausgestaltet ist. In bevorzugter Weise ist die Befestigungsvorrichtung mit einer von einer Oberseite der Schleppgasdüse zu der Unterseite der Schleppgasdüse verlaufende Durchführung zum Bearbeiten des Schweißbereichs versehen. Typischerweise ist die Befestigungsvorrichtung als Prozesskammer ausgestaltet, also als ein Bauteil, das allseitig bis auf die Durchführung geschlossen ist.

Alternativ oder zusätzlich kann die Schleppkammer eine Mehrzahl von jeweils einteilig mit der Schleppkammer ausgebildeten Gaskanälen aufweisen. Durch die Gaskanäle, die typischerweise zwischen der Gaseintrittsöffnung und der länglichen Öffnung verlaufen, kann das Gas gezielt auf den Schweißbereich geleitet werden. Auch in diesem Fall ist eine einteilige Ausgestaltung vorteilhaft im Hinblick auf mechanische Stabilität und Ausgestaltung der Schleppkammer in gewünschter Weise. Die Gaskanäle werden typischerweise durch das Abdeckelement vor Verschmutzung und Verschleiß geschützt.

Vorzugsweise weisen die Gaskanäle eine äußere Oberfläche auf, die mindestens doppelt so groß ist wie eine auf den Schweißbereich projizierte Fläche der länglichen Öffnung. Dies ermöglicht einen ausreichend langen Verbleib des Gases in den Gaskanälen. Die Gaskanäle sind somit lang genug, um die Strömung zu laminarisieren und gleichzeitig einen Wärmeübergang auf das Gas zu ermöglichen.

Die Unterseite der Schleppgasdüse ist typischerweise zumindest bereichsweise, vorzugsweise vollständig, flach oder mit einem Radius, vorzugsweise einem konstanten Radius, gebogen ausgebildet. Es kann auch vorgesehen sein, dass die gesamte Unterseite der Schleppgasdüse flach oder mit dem Radius gebogen ausgebildet ist. Es kann auch eine Ausbildung in gebogener bzw. gekrümmter Form mit einem gerade verlaufenden Endstück vorgesehen sein, was einen besseren Gasschutz ermöglicht. Durch eine Biegung bzw. Krümmung mit einem von unendlich verschiedenen Radius kann eine Anpassung an verschiedene Oberflächen erreicht werden, während eine flache Ausgestaltung eine einfache Bauform ermöglicht.

Eine Vorlaufkammer an der Befestigungsvorrichtung kann vorgesehen sein, um eine zusätzliche Beeinflussung des Schweißvorgangs durch vorlaufendes Gas vorzunehmen. Hierzu kann die Vorlaufkammer ebenso wie die Schleppkammer mit Gaskanälen und bzw. oder Gasverteilkörpern versehen sein. Ebenso kann ein Kühlkanal vorgesehen sein bzw. die Vorlaufkammer durch ein eigenes Abdeckelement abgedeckt sein. Vorzugsweise sind die Vorlaufkammer, die Befestigungsvorrichtung und die Schleppkammer bzw. zumindest zwei der genannten Kammern bzw. Vorrichtungen einteilig miteinander, also als ein einziges Bauteil, ausgeführt.

Das Abdeckelement kann zum Sicherstellen eines sicheren Halts mit mindestens einem Befestigungselement, insbesondere einer Schraube oder einer Klammer, an der Befestigungsvorrichtung und bzw. oder der Schleppkammer befestigt sein. Vorzugsweise ist das Abdeckelement in einer Führung der Schleppkammer und bzw. oder der Befestigungsvorrichtung befestigt. Es kann auch eine Kombination verschiedener Befestigungselemente zum Einsatz kommen.

Das Abdeckelement kann dabei als ein Abdeckblech, ein aus einem Sinterwerkstoff hergestelltes Bauteil wie ein Sinterblech, vorzugsweise mit Wabenstruktur, und bzw. oder als einlagige oder mehrlagige Gewebelage, vorzugsweise ein Metallgewebe, ausgestaltet sein.

Das Abdeckelement und bzw. oder die Gaskanäle können gewinkelt ausgeführt sein, um einen besseren Schutz an Düsenflanken zu erreichen.

Die Befestigungsvorrichtung und die Schleppkammer und, sofern vorgesehen, die Vorlaufkammer können durch selektives Laserschmelzen hergestellt sein. Dieses Herstellungsverfahren ermöglicht eine einfache und kostengünstige Herstellung einteiliger Schleppgasdüsen, in die einfach und unkompliziert beliebige Kanäle für Gas oder Kühlfluid einbringbar sind. Insbesondere können zusätzlich zu dem abnehmbaren Abdeckelement auch durch Strahlschmelzen hergestellte gedruckte Düsenbereiche vorliegen. Alternativ oder zusätzlich kann die Schleppgasdüse derart hergestellt werden, dass ein Winkel, typischerweise ein Anstellwinkel und ein Neigungswinkel, unter dem ein Brenner in die Durchführung einbringbar ist, zwischen 1° und 15° beträgt. Ein Transversalversatz, beispielsweise bei gekrümmten Schleppgasdüsen für Rohre, kann zwischen 1/50 und 1/2 eines Krümmungsdurchmessers liegen.

Es kann vorgesehen sein, dass mindestens ein Geometriemerkmal der Schleppgasdüse mit einem Hinterschnitt versehen ist. Insbesondere können zumindest die Befestigungsvorrichtung und bzw. oder die Schleppkammer den Hinterschnitt aufweisen. Alternativ oder zusätzlich kann der Hinterschnitt aber auch an der Gaseintrittsöffnung, dem Gasverteiler, dem Gasverteilkörper, dem Kühlkanal, der Durchführung, mindestens einem der Gaskanäle und bzw. oder dem Befestigungselement ausgebildet sein. Insbesondere bedingt durch das Strahlschmelzverfahren oder Pulverbettverfahren zum Herstellen können somit geometrische Strukturen zum Führen von Fluiden wie Prozessgasen oder Kühlfluiden ausgebildet werden, die in bekannten Schleppgasdüsen nicht herstellbar sind. Somit wird eine Funktionalität der Schleppgasdüse erhöht und die Schleppgasdüse kann gezielt an verschiedene Anwendungen, insbesondere an die Geometrie des Bauteils und die geforderte Brennerpositionierung und -ausrichtung angepasst werden.

Ein Abdeckelement mit Öffnungen für eine Schleppgasdüse weist typischerweise die zuvor beschriebenen Eigenschaften auf. Insbesondere kann das Abdeckelement mit einem Aufnahmeelement für eine Befestigungsvorrichtung wie eine Schraube ausgebildet sein. Alternativ oder zusätzlich kann das Abdeckelement gewinkelt ausgeführt sein und bzw. oder das Aufnahmeelement in einem gegenüber dem restlichen Abdeckelement gebogenen oder abgewinkelten Randbereich des Abdeckelements angeordnet sein. Unter dem Randbereich soll hierbei ein Bereich verstanden werden, der von einem Rand des Abdeckelements nicht mehr als 30 Prozent der gesamten Breite bzw. der gesamten Länge entfernt ist. Das Abdeckelement ist somit typischerweise für ein einseitiges Einstecken in die Schleppgasdüse ausgebildet.

Ausführungsbeispiele der Erfindung sind in den Zeichnungen dargestellt und werden nachfolgend anhand der Figuren 1 bis 7 erläutert.

Es zeigen:
- Fig. 1: eine Ausführungsform einer Schleppgasdüse mit durchgehenden Gaskanälen und flacher Unterseite;
- Fig. 2: eine Ausführungsform der Schleppgasdüse mit Hohlraum oberhalb der Gaskanäle und flacher Unterseite;
- Fig. 3: Ausführungsform der Schleppgasdüse mit Gasverteilerkörpern in einer Schleppkammer und flacher Unterseite;
- Fig. 4: eine gebogene Ausführungsform der Schleppgasdüse mit Gasverteilkörpern;
- Fig. 5: eine gebogene Ausführungsform der Schleppgasdüse mit durchgehenden Gaskanälen;
- Fig. 6: eine gebogene Ausführungsform der Schleppgasdüse mit Gasverteilkörpern und
- Fig. 7: eine Aufnahme eines Abdeckelements in einer Nut der Schleppgasdüse.

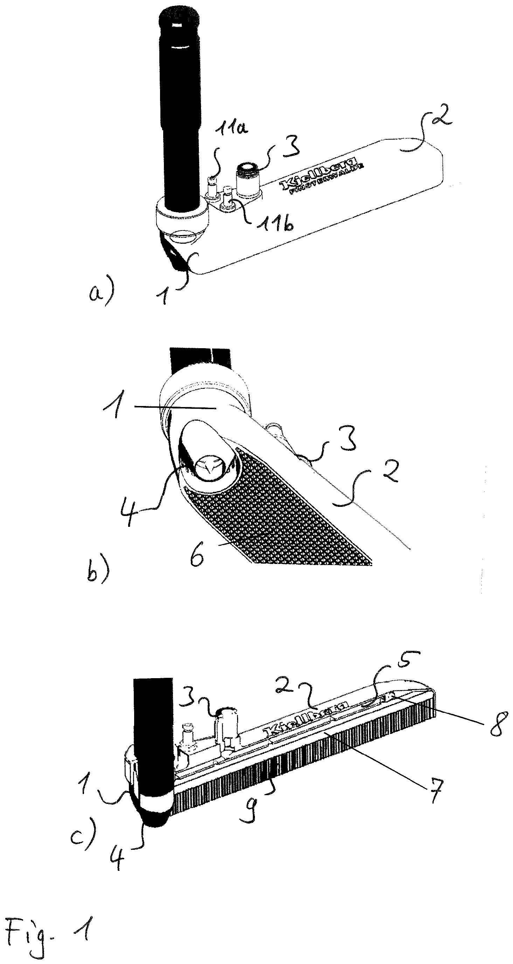

Figur 1 zeigt eine Ausführungsform einer Schleppgasdüse mit durchgehenden Gaskanälen 9 und flacher Unterseite. In Figur 1a) ist die Schleppgasdüse mit ihrer Prozesskammer 1, die auch als Befestigungsvorrichtung für eine Prozessdüse wie einen Brenner dient, ihrer Schleppkammer 2 und einer Gaseintrittsöffnung 3 in einer perspektivischen Ansicht dargestellt. Die gesamte Schleppgasdüse, insbesondere eine Unterseite, die der Gaseintrittsöffnung 3 in dem dargestellten Ausführungsbeispiel gegenüberliegt, sind in flacher Bauform ausgeführt. Zusätzlich sind neben der Gaseintrittsöffnung 3 auf einer Oberseite der Schleppkammer 2 noch ein Einlass 11a und ein Auslass 11b für ein Kühlfluid, beispielsweise Wasser, vorgesehen.

Figur 1b) zeigt die in Figur 1a) dargestellte Schleppgasdüse in perspektivischer Ansicht von unten. Die Prozesskammer 1 weist eine Durchführung 4 auf, die von der Oberseite zur Unterseite der Schleppgasdüse verläuft und in der beispielsweise ein Laserstrahl von einer oberhalb der Schleppgasdüse angeordneten Laserstrahlungsquelle oder ein Schweißlichtbogen von einem oberhalb der Schleppgasdüse angeordneten Schweißbrenner (beispielsweise einem Plasmabrenner oder einem Wolfram-Inertgas-Brenner) auf ein Werkstück gerichtet werden kann. Alternativ oder zusätzlich kann durch die Zuführung auch eine Gasbeaufschlagung des Werkstücks erfolgen. Die Schleppkammer 2 weist eine längliche Öffnung an ihrer Unterseite auf, also eine Öffnung, deren Länge mindestens doppelt so groß wie ihre Breite ist. Diese längliche Öffnung ist typischerweise mit einem abnehmbaren und auch wieder anbringbaren Abdeckelement 6, typischerweise einer Abdeckplatte, überdeckt. Das Abdeckelement 6 ist mit Öffnungen versehen, durch die ein Gas auf einen Schweißbereich gelangen kann, der sich bei Anwendung der Schleppgasdüse der länglichen Öffnung gegenüber auf dem Werkstück befindet.

Wie in Figur 1c) in einer Schnittansicht der Schleppgasdüse dargestellt, wird durch die Gaseintrittsöffnung 3 ein Gas in die Schleppgasdüse eingebracht und über einen Gasverteiler 5 insbesondere in der Schleppkammer 2 verteilt. Über mehrere zur Strömungslaminarisierung wabenförmig angeordnete Gaskanäle 9, die zwischen dem Gasverteiler 5 und der länglichen Öffnung bzw. dem Abdeckelement 6 verlaufen. Eine äußere Oberfläche der Gaskanäle 9 ist dabei mindestens doppelt so groß wie eine auf den Schweißbereich projizierte Fläche der länglichen Öffnung. In dem in Figur 1c) dargestellten Ausführungsbeispiel kann zwischen dem als Kanal ausgebildeten Gasverteiler 5 bzw. als Teil des Gasverteilers 5 ein abnehmbarer und wieder anbringbarer Gasverteilkörper 7 aus einem offenporigen Metallschaum vorgesehen sein, der sich über eine gesamte Länge der Schleppkammer 2 erstreckt. Der Gasverteilkörper 7 sorgt für eine gewünschte Anströmung einzelner der Gaskanäle 9 und somit eine definierte Anströmung des Schweißbereichs.

Die Prozesskammer 1 und die Schleppkammer 2 sind einteilig und ohne eine Fügeverbindung ausgebildet, liegen also als ein einziges, monolithisches Bauteil vor. Die Gaseintrittsöffnung 3, der Einlass 11a und der Auslass 11b kann ebenfalls einteilig mit der Prozesskammer 1 und der Schleppkammer 2 ausgebildet sein. In die Schleppkammer 2 eingebracht ist ein Kühlkanal 8, durch den das durch den Einlass 11a einströmende Kühlfluid in der Schleppkammer 2 verteilt und durch den Auslass 11b aus ihr entfernt werden kann. Dieser Kühlkanal 8 kann auch in der Prozesskammer 1 verlaufen und ist ebenfalls einteilig mit diesen Einheiten ausgebildet.

In weiteren Ausführungsbeispielen kann eine Vorlaufkammer an einer der Schleppkammer 2 gegenüberliegenden Seite der Prozesskammer 1 vorgesehen sein. Die Vorlaufkammer ist vorzugsweise ebenfalls einteilig mit der Prozesskammer 1 und der Schleppkammer 2 aufgebaut und kann die beschriebenen Eigenschaften der Schleppkammer 2 aufweisen.

Eine einteilige Ausbildung der Schleppgasdüse kann in einfacher Weise dadurch erreicht werden, dass die Prozesskammer 1, die Schleppkammer 2 und, falls vorgesehen, die Vorlaufkammer 3 durch selektives Laserschmelzen hergestellt werden. Dies ermöglicht es auch, die Gaskanäle 9 und den Kühlkanal 8 in einfacher Weise einzubringen. Zudem kann auch mindestens einer der Gasverteilkörper 7 durch selektives Laserschmelzen hergestellt werden. Typischerweise wird als Werkstoff für das selektive Laserschmelzen ein metallischer Werkstoff, insbesondere ein Stahl wie Edelstahl Nummer 1.4404, Aluminium, Kupfer und bzw. oder eine Kupferlegierung verwendet.

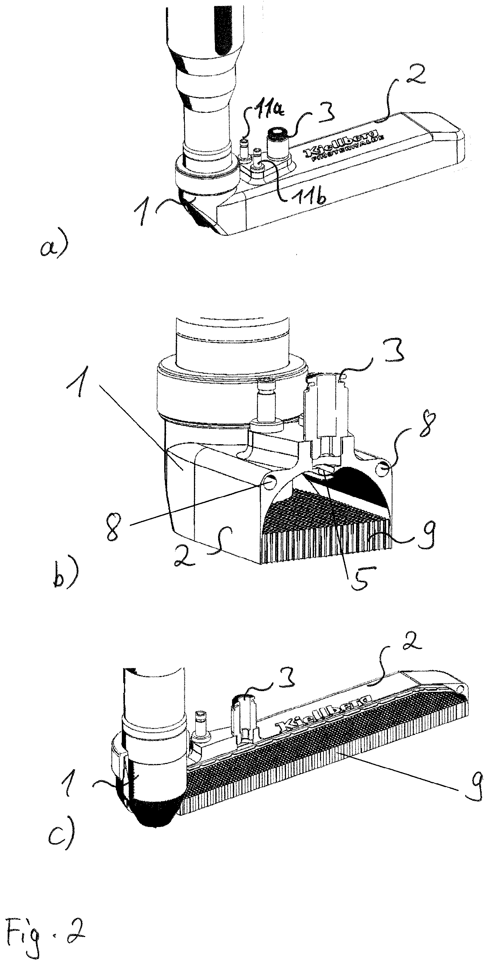

Figur 2 zeigt eine weitere Ausführungsform der Schleppgasdüse, bei der im Gegensatz zu dem in Figur 1 gezeigten Ausführungsbeispiel jedoch ein Hohlraum zwischen der Gaseintrittsöffnung 3 und den Gaskanälen 9 verbleibt. Wiederkehrende Merkmale sind in dieser Figur wie auch in den folgenden Figuren mit identischen Bezugszeichen ersehen.

In Figur 2a) ist die Schleppgasdüse in einer Figur 1a) entsprechenden Ansicht dargestellt. Figur 2b) zeigt eine Schnittdarstellung der Schleppkammer 2. Es sind zwei Kühlkanäle 8vorgesehen, die an der Oberseite entlang einer Länge der Schleppkammer 2 verlaufen. Zwischen dem Gasverteilkörper 7 und den Gaskanälen 9 ist nun jedoch ein Hohlraum vorgesehen, in den beliebig geformte Gasverteilkörper 7 eingebracht werden können.

Figur 2c) zeigt in einer Figur 1c) entsprechenden Ansicht ebenfalls diesen Hohlraum, der sich im dargestellten Ausführungsbeispiel oberhalb sämtlicher Gaskanäle 9 erstreckt, in weiteren Ausführungsbeispielen aber auch nur oberhalb einiger der Gaskanäle 9 vorgesehen sein kann.

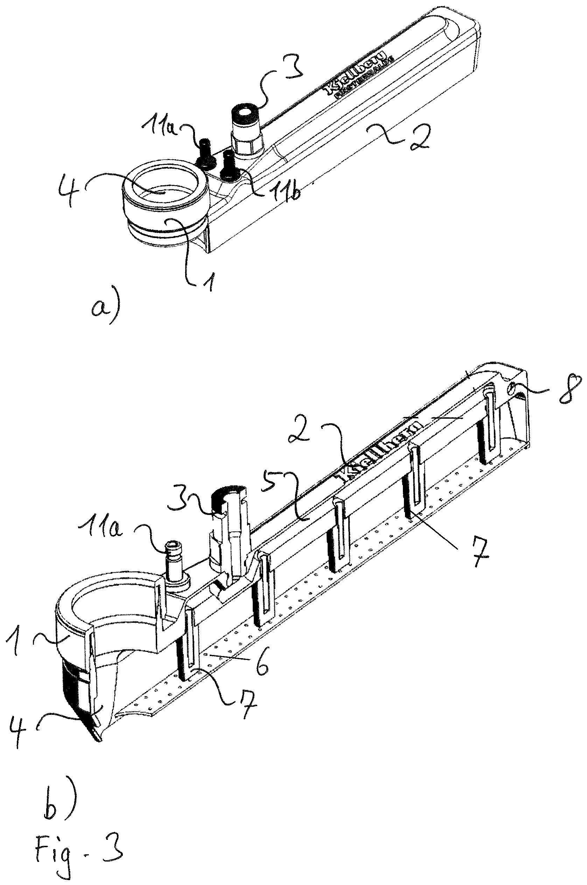

In Figur 3 ist eine Ausführungsform der Schleppgasdüse gezeigt, in der zylinderförmige Gasverteilkörper 7 aus dem offenporigen Metallschaum in einen Hohlraum der Schleppkammer 2 eingebracht sind, der sich zwischen der Gaseintrittsöffnung 3 und dem Abdeckelement 6 erstreckt. In dem Hohlraum können sich auch weitere Bauteile befinden, die durch Schrauben, Einstecken, Kleben, aber auch Löten, Schweißen und bzw. oder eine andere stoffschlüssige Verbindung mit der Schleppgasdüse verbunden sind.

Figur 3a) zeigt die Schleppgasdüse in einer perspektivischen Ansicht, während Figur 3b) eine Schnittdarstellung der Schleppgasdüse ist. Die Gasverteilkörper 7 sind in periodischen Abständen entlang einer Längsachse der Schleppkammer 2 in diese eingebracht und stehen mit einer oberen Öffnung mit dem Gasverteiler 5 derart in Kontakt, dass das Gas in sie einströmen kann. In weiteren Ausführungsbeispielen kann auch eine nicht-periodische Anordnung vorgesehen sein. Durch die Porosität oder das Vorsehen von Strömungskanälen in den Gasverteilkörpern 7 wird das Gas über die Düsenlänge verteilt und es verlässt die Schleppkammer 2 durch die Öffnungen des Abdeckelements 6. Die Anordnung erlaubt es, definierte Strömungswiderstände zu verwirklichen, die die angestrebte Gasverteilung realisieren. Die Öffnungen können punktförmig oder länglich ausgestaltet sein bzw. eine beliebige Geometrie, z. B. rechteckförmig, rautenförmig oder trapezförmig sein. Anstelle der Prozesskammer 1 ist nun ein Ring als Befestigungsvorrichtung für den Brenner in Figur 3a) dargestellt.

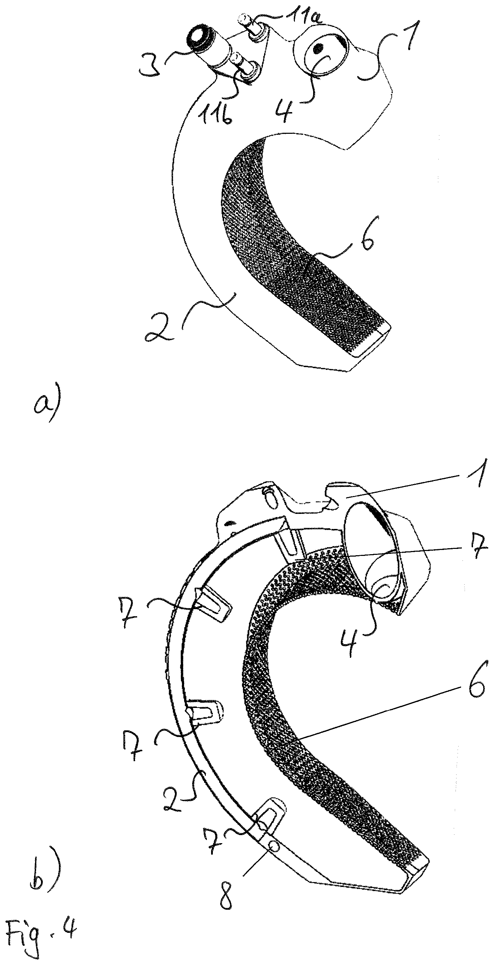

In Figur 4 ist eine Ausführungsform der Schleppgasdüse gezeigt, in der nicht nur die Unterseite der Schleppgasdüse, sondern die gesamte Schleppgasdüse mit einem konstanten, von unendlich verschiedenen Radius gekrümmt bzw. gebogen ist. Die Gasverteilkörper 7 sind in diesem Ausführungsbeispiel zusammen mit der Schleppkammer 2 und der Prozesskammer 1 durch selektives Laserschmelzen hergestellt, so dass die Gasverteilkörper 7, die Prozesskammer 1 und die Schleppkammer 2 ein einziges Bauteil bilden, also einteilig ausgestaltet sind. Durch dieses simultane Drucken mehrerer Teile der Schleppgasdüse in einem Arbeitsschritt wird eine effiziente Fertigung gewährleistet. Figur 4a) zeigt wiederum eine perspektivische Ansicht der Schleppgasdüse, während in der in Figur 4b) gezeigten Schnittdarstellung eine radiale Anordnung der zylinderförmigen Gasverteilkörper 7 dargestellt wird.

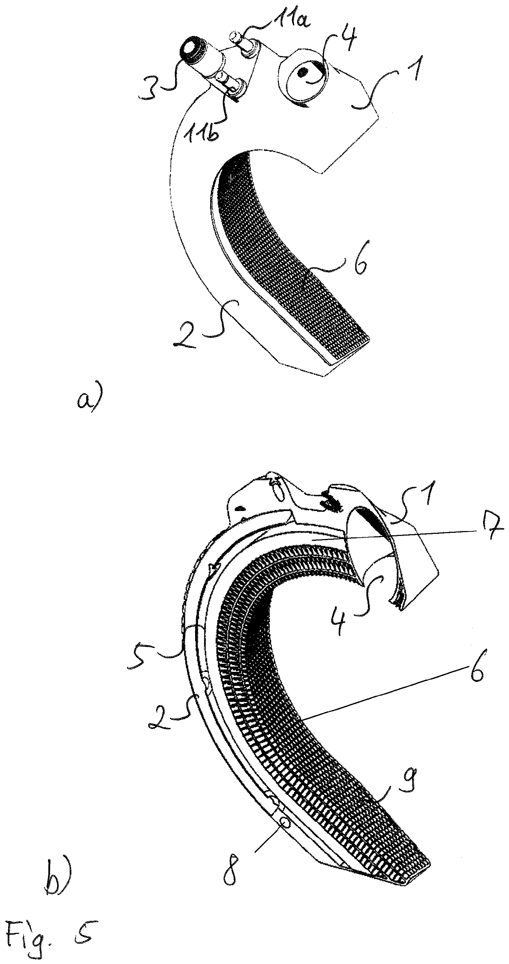

Figur 5 zeigt eine weitere gebogene Ausführungsform der Schleppgasdüse, die im Gegensatz zu der in Figur 4 dargestellten Ausführungsform jedoch mit durchgehenden Gaskanälen 9 versehen ist. Während Figur 5a) in einer Figur 4a) entsprechenden Darstellung die Schleppgasdüse von außen zeigt, ist in der Schnittdarstellung der Figur 5b) erkennbar, dass der Gasverteiler 5 über einen über die gesamte Schleppgasdüse sich erstreckenden Gasverteilkörper 7 die Gaskanäle 9 mit dem Gas versorgt. Das in Figur 5 dargestellte Ausführungsbeispiel entspricht daher in seinem Aufbau im Wesentlichen dem in Figur 1 gezeigten Ausführungsbeispiel, ist jedoch für Rohre ausgelegt.

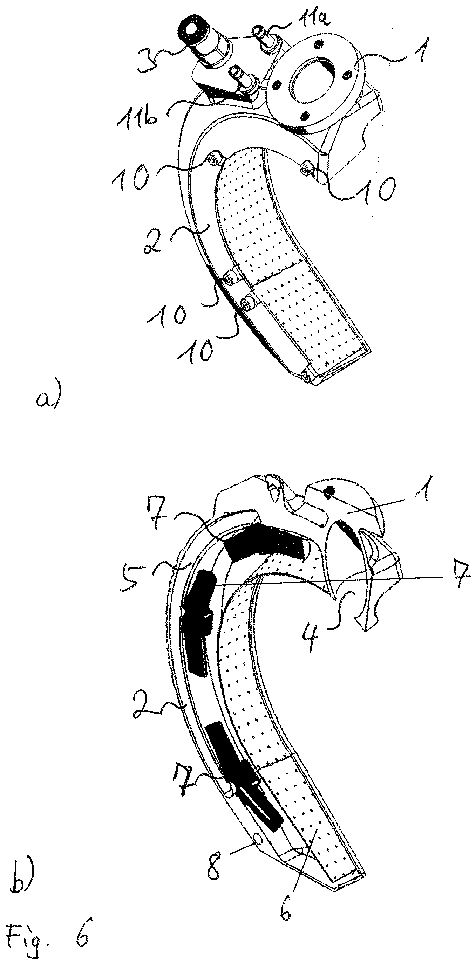

Figur 6 zeigt ein weiteres Ausführungsbeispiel der Schleppgasdüse in gebogener bzw. gekrümmter Ausführung. In Figur 6a) ist die Schleppgasdüse in einer den Figuren 4a) und 5a) entsprechenden Darstellung gezeigt. Das Abdeckelement 6 ist über mehrere Schrauben 10 als Befestigungselemente an der Schleppkammer 2 und der Prozesskammer 1 befestigt. Statt der Schrauben 10 können in weiteren Ausführungsbeispielen auch Klammern verwendet werden.

In Figur 6b) ist die Schleppgasdüse in einer Schnittansicht dargestellt. Die Gasverteilkörper 7 sind nun tangential zu einem Kreisbogen der Krümmung angeordnet und jeweils als Paare mit gemeinsamer Einströmöffnung ausgebildet.

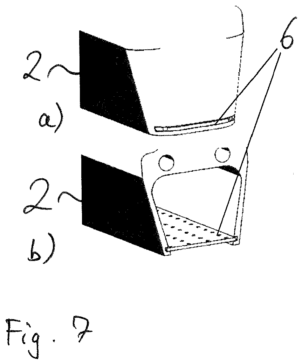

Figur 7 zeigt ein Ausführungsbeispiel der Erfindung, bei dem das Abdeckelement 6 als Abdeckblech ausgeführt in einer beidseitig parallel zu einer Längsachse der Schleppkammer 2 an der länglichen Öffnung verlaufenden Nut der Schleppgasdüse aufgenommen und befestigt ist. Figur 7a) zeigt hierbei, dass eine Öffnung zur Aufnahme des Abdeckelements 6 an einer der Prozesskammer 1 abgewandten Seite der Schleppkammer 2 angeordnet ist und derart ausgestaltet ist, dass das Abdeckelement 6 bündig mit einer Außenoberfläche der Schleppkammer 2 abschließt. In Figur 7b) ist eine Schnittdarstellung der Schleppkammer 2 mit Nut und aufgenommenen Abdeckelement 6 wiedergegeben.

Die beschriebenen Schleppgasdüsen können bei verschiedenen Schweißprozessen wie Metallschutzgasschweißen, Metallinertgasschweißen, Metallaktivgasschweißen, insbesondere Wolframinertgasschweißen, Plasmaschweißen oder Laserschweißen eingesetzt werden.

## Patentansprüche

1. Schleppgasdüse zum Beaufschlagen eines Schweißbereichs mit einem Gas
mit einer Befestigungsvorrichtung (1) für ein weiteres Bauteil, einer Schleppkammer (2) und einer Gaseintrittsöffnung (3),
wobei in der Schleppkammer (2) mindestens ein Gasverteiler (5) zum Verteilen des durch die Gaseintrittsöffnung (3) einströmenden Gases auf den Schweißbereich über eine länglichen Öffnung an einer der Gaseintrittsöffnung (3) gegenüberliegenden Unterseite der Schleppgasdüse angeordnet ist,
wobei die Befestigungsvorrichtung (1) und die Schleppkammer (2) monolithisch und frei von einer Fügeverbindung ausgeführt sind und die längliche Öffnung durch ein abnehmbares Abdeckelement (6) mit Öffnungen zumindest teilweise abgedeckt ist, wobei die Schleppgasdüse mindestens einen in der Schleppkammer (2) angeordneten Gasverteilkörper (7) aufweist, **dadurch gekennzeichnet, dass** in der Schleppkammer (2) mindestens ein einteilig mit der Schleppkammer (2) ausgebildeter Kühlkanal (8) für ein Kühlfluid angeordnet ist, wobei der mindestens eine Gasverteilkörper (7) als ein offenporiger Metallschaum oder ein aus Pulver gepresster Sinterkörper ausgebildet ist.

2. Schleppgasdüse nach Anspruch 1, **dadurch gekennzeichnet, dass** die Befestigungsvorrichtung (1) für die Prozessdüse derart ausgestaltet ist, dass ein Brenner oder ein Brennerhalter an der Schleppgasdüse befestigbar ist und/oder die Befestigungsvorrichtung (1) selbst als Düse ausgestaltet ist.

3. Schleppgasdüse nach einem der vorhergehenden Ansprüche, **dadurch gekennzeichnet, dass** die Befestigungsvorrichtung (1) eine von einer Oberseite der Schleppgasdüse zu der Unterseite der Schleppgasdüse verlaufende Durchführung (4) zum Bearbeiten des Schweißbereichs aufweist.

4. Schleppgasdüse nach einem der vorhergehenden Ansprüche, **dadurch gekennzeichnet, dass** die Schleppkammer (2) eine Mehrzahl von jeweils einteilig mit der Schleppkammer (2) ausgebildeten Gaskanälen (9) aufweist.

5. Schleppgasdüse nach Anspruch 4, **dadurch gekennzeichnet, dass** die Gaskanäle (9) eine äußere Oberfläche aufweisen, die mindestens doppelt so groß ist wie eine auf den Schweißbereich projizierte Fläche der länglichen Öffnung.

6. Schleppgasdüse nach einem der vorhergehenden Ansprüche, **dadurch gekennzeichnet, dass** die Unterseite der Schleppgasdüse zumindest bereichsweise flach oder mit Radius gebogen ausgebildet ist.

7. Schleppgasdüse nach einem der vorhergehenden Ansprüche, **dadurch gekennzeichnet, dass** das Abdeckelement (6) mit mindestens einem Befestigungselement, insbesondere einer Schraube (10) oder einer Klammer, an der Prozesskammer (1) und/oder der Schleppkammer (2), vorzugsweise in einer Führung, befestigt ist.

8. Herstellverfahren zum Herstellen einer Schleppgasdüse nach einem der vorhergehenden Ansprüche, **dadurch gekennzeichnet, dass** die Befestigungsvorrichtung (1) und die Schleppkammer (2) und, sofern vorgesehen, die Vorlaufkammer durch selektives Laserschmelzen hergestellt werden.

## Claims

1. A carrier gas nozzle for applying a gas to a welding area
having a fastening device (1) for a further component, a carrier gas chamber (2) and a gas inlet opening (3),
wherein at least one gas distributor (5) for distributing the gas flowing in through the gas inlet opening (3) to the welding area via an elongated opening is arranged in the carrier gas chamber (2) on an underside of the carrier gas nozzle opposite the gas inlet opening (3),
wherein the fastening device (1) and the carrier gas chamber (2) are monolithic and free of a joint connection and the elongated opening is at least partially covered by a removable cover element (6) with openings, wherein the carrier gas nozzle has at least one gas distribution body (7) arranged in the carrier gas chamber (2), **characterized in that** at least one cooling channel (8) for a refrigerant fluid, which cooling channel is formed integrally with the carrier gas chamber (2), is arranged in the carrier gas chamber (2), wherein the at least one gas distribution body (7) is formed as an open-pored metal foam or a sintered body pressed from powder.

2. The carrier gas nozzle according to claim 1, **characterized in that** the fastening device (1) for the process nozzle is designed in such a way that a burner or a burner holder can be fastened to the carrier gas nozzle and/or the fastening device (1) itself is designed as a nozzle.

3. The carrier gas nozzle according to any one of the preceding claims, **characterized in that** the fastening device (1) has a feedthrough (4) extending from an upper side of the carrier gas nozzle to the underside of the carrier gas nozzle for processing the welding area.

4. The carrier gas nozzle according to any one of the preceding claims, **characterized in that** the carrier gas chamber (2) comprises a plurality of gas channels (9) each formed integrally with the carrier gas chamber (2).

5. The carrier gas nozzle according to claim 4, **characterized in that** the gas channels (9) have an outer surface area that is at least twice as large as an area of the elongated opening projected onto the welding area.

6. The carrier gas nozzle according to one of the preceding claims, **characterized in that** the underside of the carrier gas nozzle is designed to be flat or curved with a radius at least in regions.

7. The carrier gas nozzle according to one of the preceding claims, **characterized in that** the cover element (6) is fastened to the process chamber (1) and/or the carrier gas chamber (2), preferably in a guide, by means of at least one fastening element, in particular a screw (10) or a bracket.

8. A manufacturing method for manufacturing a the carrier gas nozzle according to any one of the preceding claims, **characterized in that** the fastening device (1) and the carrier gas chamber (2) and, if provided, the supply chamber are manufactured by selective laser melting.

## Revendications

1. Buse à gaz porteur pour la sollicitation d'une zone de soudage avec un gaz
avec un dispositif de fixation (1) pour un autre composant, une chambre porteuse (2) et une ouverture d'entrée de gaz (3),
dans laquelle au moins un distributeur de gaz (5) est disposé dans la chambre porteuse (2) pour distribuer le gaz affluant par l'ouverture d'entrée de gaz (3) sur la zone de soudage par l'intermédiaire d'une ouverture allongée sur une face inférieure de la buse de gaz porteur opposée à l'ouverture d'entrée de gaz (3),
dans laquelle le dispositif de fixation (1) et la chambre porteuse (2) sont conçus de manière monolithique et exempte d'une liaison d'assemblage et l'ouverture allongée est au moins partiellement recouverte par un élément de recouvrement (6) amovible avec des ouvertures, dans laquelle la buse de gaz porteur présente au moins un corps de distribution de gaz (7) disposé dans la chambre porteuse (2), **caractérisée en ce qu'**au moins un canal de refroidissement (8) pour un fluide de refroidissement réalisé d'une seule pièce avec la chambre porteuse (2) est disposé dans la chambre porteuse (2), dans laquelle le au moins un corps de distribution de gaz (7) est réalisé sous la forme d'une mousse métallique à pores ouverts ou d'un corps fritté pressé à partir de poudre.

2. Buse à gaz porteur selon la revendication 1, **caractérisée en ce que** le dispositif de fixation (1) pour la buse de traitement est conçu de telle sorte qu'un brûleur ou un support de brûleur peut être fixé à la buse de gaz porteur et/ou le dispositif de fixation (1) est lui-même conçu comme une buse.

3. Buse à gaz porteur selon l'une quelconque des revendications précédentes, **caractérisée en ce que** le dispositif de fixation (1) présente un passage (4) s'étendant à partir d'une face supérieure de la buse à gaz porteur vers la face inférieure de la buse à gaz porteur pour usiner la zone de soudage.

4. Buse à gaz porteur selon l'une quelconque des revendications précédentes, **caractérisée en ce que** la chambre porteuse (2) présente une pluralité de canaux de gaz (9) réalisés chacun d'une seule pièce avec la chambre porteuse (2).

5. Buse à gaz porteur selon la revendication 4, **caractérisée en ce que** les canaux de gaz (9) présentent une surface extérieure qui est au moins deux fois plus grande qu'une surface de l'ouverture allongée projetée sur la zone de soudage.

6. Buse à gaz porteur selon l'une quelconque des revendications précédentes, **caractérisée en ce que** la face inférieure de la buse à gaz porteur est réalisée de manière plate ou courbée avec un rayon au moins par zones.

7. Buse à gaz porteur selon l'une quelconque des revendications précédentes, **caractérisée en ce que** l'élément de recouvrement (6) est fixé à la chambre de traitement (1) et/ou la chambre porteuse (2), de préférence dans un guidage, avec au moins un élément de fixation, en particulier une vis (10) ou une agrafe.

8. Procédé de fabrication pour la fabrication d'une buse à gaz porteur selon l'une quelconque des revendications précédentes, **caractérisé en ce que** le dispositif de fixation (1) et la chambre porteuse (2) et, si elle est prévue, la préchambre sont fabriqués par fusion par laser sélective.
